# EUROPÄISCHE PATENTANMELDUNG

(11) **EP 4 826 976 A1**
(43) Veröffentlichungstag der Anmeldung: **21.10.2026**
(21) Anmeldenummer: 25170674.3
(22) Anmeldetag: 15.04.2025
(51) Int. Cl.: H02M 1/36, H02M 5/297, H02M 7/483

(54) **UMRICHTERANORDNUNG UND VERFAHREN ZU DEREN BETRIEB**

(71) Anmelder: Siemens Energy Global GmbH & Co. KG, 81739 München (DE)
(72) Erfinder: Leicht, Michael, 96132 Schlüsselfeld (DE); Pinkwart, Jonas, 90768 Fürth (DE); Müller, Sascha Roman, 01067 Dresden (DE); Pieschel, Martin, 90518 Altdorf (DE)

(57) **Zusammenfassung**

Die Erfindung betrifft eine Umrichteranordnung (10, 1000) mit einem modularen Matrixumrichter (11, 1001), wobei der Matrixumrichter (11, 1001) Schaltmodule (SM) umfasst, die jeweils Leistungshalbleiterschalter (S1-S4) sowie einen Energiespeicher (C) aufweisen, und der netzseitig mit einer zumindest dreiphasigen Wechselspannungsverbindung (24) verbunden ist. Die Erfindung zeichnet sich durch eine Vorladeeinrichtung (31) zum Vorladen der Energiespeicher (C) aus, wobei die Vorladeeinrichtung (31) wenigstens ein Vorlademodul (32) umfasst, das netzseitig mit genau zwei Phasenleitungen (21,22) der Wechselspannungsverbindung (24) und last-seitig mit einem ersten Ausgang (U) des Matrixumrichters (11, 1001) verbunden ist, und das Schaltelemente (53, 56) umfasst, mittels deren die beiden Phasenleitungen (21,22) jeweils mit dem ersten Ausgang (U) des Matrixumrichters (11, 1001) verbindbar sind. Die Erfindung betrifft ferner ein Verfahren zum Betreiben der Umrichteranordnung.

## Beschreibung

Die Erfindung betrifft eine Umrichteranordnung mit einem modularen Matrixumrichter, wobei der Matrixumrichter Schaltmodule umfasst, die jeweils Leistungshalbleiterschalter sowie einen schaltmoduleigenen Energiespeicher aufweisen, und der im Betrieb netzseitig mit einer zumindest dreiphasigen Wechselspannungsverbindung verbunden ist.

Eine solche Umrichteranordnung kann beispielsweise dazu verwendet werden, eine nichtlineare Last zu versorgen. Ein Beispiel für eine nichtlineare Last ist ein Lichtbogenofen (EAF), mittels dessen bspw. zur Stahlerzeugung leitfähiges Material auf Temperaturen von bis zu 4000 °C erhitzt und geschmolzen werden kann. Die mehrphasige Wechselspannungsverbindung kann Teil eines Wechselspannungsnetzes sein oder an ein solches angeschlossen sein.

Die EP 3 120 451 B1 offenbart eine Stromversorgungseinrichtung für eine nichtlineare Last, die einen modularen Matrixumrichter aufweist.

Bei Inbetriebnahme müssen die Energiespeicher der Schaltmodule des Matrixumrichters aufgeladen (vorgeladen) werden (hierbei wird Inbetriebnahme sowohl als ein erstes Hochfahren nach Installation als auch im Sinne einer Zuschaltung nach einer Betriebsunterbrechung verstanden). Dies kann mittels einer externen Hilfsenergieversorgung durchgeführt werden, was jedoch die Komplexität und die Kosten der Umrichteranordnung erheblich erhöht. Es ist weiterhin bekannt, die nötige Spannung (typischerweise ca. 70% über einer Nennspannung der Wechselspannungsverbindung) mittels einer Transformatoreinrichtung bereitzustellen. Diese Lösung führt jedoch zu Problemen bei Isolationsanforderungen, hohem Platzbedarf, Installations- und Betriebskosten. Des Weiteren ist hierbei eine zusätzliche Personengefährdung möglich.

Aus der EP 3 269 033 B1 ist bekannt, eine Anordnung aus mechanischen Schaltelementen zu verwenden, um drei in Stern geschaltete Teilumrichter, kurzzeitig in eine Dreieckschaltung der Teilumrichter umzuschalten. Diese werden mit einer Nennspannung passiv vorgeladen. Hierbei entsteht nachteilig ein hoher Installationsaufwand wegen der notwendigen Anschlussführung. Die Koordination der Schaltelemente ist zudem fehleranfällig und es muss eine hohe Anzahl an Schaltelementen gewartet werden.

Die Aufgabe der Erfindung ist es, eine eingangs genannte Umrichteranordnung vorzuschlagen, die möglichst kostengünstig und zuverlässig im Betrieb ist, insbesondere im Hinblick auf deren Inbetriebnahme und ein Vorladen der Energiespeicher.

Die Aufgabe wird durch eine Umrichteranordnung mit den Merkmalen des Patentanspruchs 1 gelöst.

Die erfindungsgemäße Umrichteranordnung zeichnet sich demnach durch eine Vorladeeinrichtung zum Vorladen der Energiespeicher, wobei die Vorladeeinrichtung wenigstens ein Vorlademodul umfasst, das netzseitig mit genau zwei Phasenleitungen der Wechselspannungsverbindung und lastseitig mit einem ersten Ausgang des Matrixumrichters verbunden ist, und das Schaltelemente umfasst, mittels deren die beiden Phasenleitungen - unabhängig voneinander - jeweils mit dem ersten Ausgang des Matrixumrichters verbindbar (oder von diesem Trennbar) sind.

Mit der Erfindung ist es möglich, eine Anordnung aus mechanischen Schaltelementen zum Vorladen des Matrixumrichters zu verwenden, die eine einfache Anschlussführung mit relativ wenigen Schaltelementen aufweist, die zudem relativ einfach anzusteuern ist. Die Energiespeicher des Matrixumrichters werden gezielt durch eine Umschaltung des Vorlademoduls mit einer verketteten Netzspannung versorgt, wobei geeigneterweise gezielt einzelne Umrichtereinheiten überbrückt und in einem nachfolgenden Schritt mit der verketteten Netzspannung geladen werden können. Überraschenderweise hat sich gezeigt, dass eine Verbindung mit lediglich zwei Phasen der Wechselspannungsverbindung ausreichend ist, was wiederum erlaubt, zweckmäßigerweise zwei Schaltelemente zu verwenden. Drei Schaltelemente zur Anbindung aller (üblicherweise drei) Netzspannungsphasen sind nicht notwendig.

Die vorliegende Lösung bietet einige Vorteile gegenüber den bekannten Lösungen: Es ist keine aufwändige Transformatorschaltung nötig, es werden relativ wenige Trennschalter und/oder Leistungsschalter benötigt, die Lösung erfordert einen geringen Platzbedarf. Die Verschaltung ist zudem relativ gering, was vorteilhaft den Installationsaufwand verringert.

Gemäß einer Ausführungsform umfasst die Vorladeeinrichtung ferner eine Umschalteinrichtung, mittels der der erste Ausgang des Matrixumrichters (bzw. der Ausgang des Vorlademoduls) mit einem zweiten und mit einem dritten Ausgang des Matrixumrichters verbindbar ist. Die Umschalteinrichtung weist geeigneterweise einen Eingang und zwei Ausgänge auf. Der Eingang ist mit einem ersten Ausgang mittels eines ersten Umschalters und mit einem zweiten Ausgang mittels eines zweiten Umschalters verbunden. Der Eingang der Umschalteinrichtung kann mit einem Ausgang des Vorlademoduls verbunden sein. Der erste Ausgang des Umschaltmoduls kann mit dem zweiten Ausgang des Matrixumrichters und der zweite Ausgang des Umschaltmoduls mit dem dritten Ausgang des Matrixumrichters verbunden sein. Ist der erste Umschalter geöffnet, so ist der Eingang der Umschalteinrichtung von deren ersten Ausgang elektrisch getrennt, ist der zweite Umschalter geöffnet, so ist der Eingang der Umschalteinrichtung von deren zweiten Ausgang elektrisch getrennt. Mit den Schaltelementen des Vorlademoduls und den Umschaltern der Umschaltvorrichtung weist diese Variante eine besonders geringe Anzahl an notwendigen Schaltern auf.

Zweckmäßigerweise ist das wenigstens eine Vorlademodul ein erstes Vorlademodul, wobei die Vorladeeinrichtung ferner ein zweites Vorlademodul umfasst, das netzseitig (direkt) mit genau zwei Phasenleitungen der Wechselspannungsverbindung und lastseitig mit einem zweiten Ausgang des Matrixumrichters verbunden ist, und das Schaltelemente umfasst, mittels deren die beiden Phasenleitungen (unabhängig voneinander) jeweils mit dem zweiten Ausgang des Matrixumrichters verbindbar sind. Zum Beispiel sind ein erster Eingang des ersten Vorlademoduls direkt mit einer ersten Phasenleitung und ein zweiter Eingang des ersten Vorlademoduls mit einer zweiten Phasenleitung verbunden. Ein erster Eingang des zweiten Vorlademoduls kann mit der ersten aber auch mit jeder anderen Phasenleitung verbunden sein. Ist der erste Eingang des zweiten Vorlademoduls beispielsweise mit der zweiten Phasenleitung verbunden, so kann ein zweiter Eingang des zweiten Vorlademoduls mit der ersten oder mit der dritten Phasenleitung verbunden sein. Mit dieser Variante können die Ausgänge des Matrixumrichters jeweils mittels eines ihnen zugeordneten Vorlademoduls mit der Wechselspannungsverbindung verbunden (oder von ihr getrennt) werden.

Bevorzugt umfasst das wenigstens eine Vorlademodul einen ersten Vorladezweig, der eine erste Phasenleitung der Wechselspannungsverbindung mit dem ersten Ausgang des Matrixumrichters verbindet, und in dem ein erstes Schaltelement angeordnet ist, und einen zweiten Vorladezweig, der eine zweite Phasenleitung der Wechselspannungsverbindung mit dem ersten Ausgang des Matrixumrichters verbindet, und in dem ein zweites Schaltelement angeordnet ist. Die beiden Vorladezweige können ausgangsseitig (matrixumrichterseitig) miteinander verbunden sein und einem gemeinsamen Ausgang des Vorlademoduls zugeordnet sein. Werden mehrere Vorlademodule verwendet, so können einige oder alle Vorlademodule gleichartig aufgebaut sein. Auf diese Weise ist eine besonders einfache Realisierung des Vorlademoduls bereitgestellt.

Das wenigstens eine Schaltelement (bspw. das erste und/oder das zweite Schaltelement) des wenigstens einen Vorlademoduls ist geeigneterweise ein Leistungsschalter. Leistungsschalter haben den Vorteil, besonders schnell schalten zu können (typischerweise im Bereich von 100 ms).

Das wenigstens eine Schaltelement des wenigstens einen Vorlademoduls (bspw. das erste und/oder das zweite Schaltelement) kann ein Trennschalter sein. Trennschalter weisen üblicherweise zwar Schaltzeiten von mehr als 1 s auf, sind jedoch einfacher aufgebaut und im Allgemeinen kostengünstiger als Leistungsschalter.

Vorzugsweise umfasst das wenigstens eine Vorlademodul Widerstandselemente zur Spitzenstrombegrenzung auf. Beispielsweise kann je ein Widerstandselement in Reihe zu wenigstens einem Schaltelement des Vorlademoduls angeordnet sein. Zum Beispiel kann ein erstes Widerstandselement in dem ersten Vorladezweig angeordnet sein. Alternativ oder zusätzlich kann ein zweites Widerstandselement in dem zweiten Vorladezweig angeordnet sein. Es ist ebenfalls möglich, ein Widerstandselement zwischen einem Verbindungspunkt der Vorladezweige und dem Ausgang des Vorlademoduls anzuordnen. Zweckmäßigerweise fließt ein Betriebsstrom durch das Vorlademodul stets durch wenigstens ein Widerstandselement, unabhängig vom Schaltzustand der Schaltelemente des Vorlademoduls. Zweckmäßigerweise ist zu jedem der Schaltelemente des wenigstens einen Vorlademoduls ein Widerstandselement in Reihe geschaltet.

Vorzugsweise liegt ein Widerstandswert der Widerstandselemente jeweils zwischen 10 Ohm und 100 Ohm. Auf diese Weise ist bei Hochspannungsanwendungen und einem Betriebsstrom von mehr als 1 kA ein effektiver Schutz vor Überströmen gewährleistet.

Gemäß einer Ausführungsform der Erfindung umfasst die Vorladeeinrichtung ferner eine Vorladewiderstandsschaltung, wobei die Vorladewiderstandsschaltung Widerstandselemente aufweist, die jeweils in einer Phasenleitung der Wechselspannungsverbindung angeordnet sind und mittels mindestens eines Überbrückungsschaltelements überbrückbar sind. Die Vorladewiderstandschaltung kann netz- bzw. eingangsseitig des Matrixumrichters angeordnet sein. Die Vorladewiderstandschaltung kann mehrphasig ausgebildet sein (entsprechend der Anzahl der Phasenleitungen der Wechselspannungsverbindung, bspw. dreiphasig). Während des Vorladens sind die zugehörigen Überbrückungsschaltelemente (bspw. mechanische Schaltelemente) geöffnet, nach dem Vorladen werden sie geschlossen. Vorteilhafterweise wird hierdurch das Auftreten von extrem hohen Stromspitzen in allen Umrichtereinheiten verhindert. Solche hohen Stromspitzen können die Schaltmodule schädigen.

Geeigneterweise weist der Matrixumrichter eine Mehrzahl von Umrichtereinheiten auf, wobei die Umrichtereinheiten jeweils eine Mehrzahl an Hauptmodulen aufweisen, wobei die Hauptmodule jeweils einen Eingangsanschluss aufweisen, der jeweils mit einer Phasenleitung der Wechselspannungsverbindung verbunden ist, wobei die Umrichtereinheiten jeweils einen Sternpunkt aufweisen, der einerseits mit einem jeweiligen Ausgangsanschluss der Hauptmodule der jeweiligen Umrichtereinheit und andererseits mit einem der Ausgänge des Matrixumrichters verbunden ist, wobei die Hauptmodule jeweils eine Reihenschaltung einer Koppelinduktivität und einer Mehrzahl der Schaltmodule aufweisen. In einer 3x3-phasigen Ausführung umfasst der Matrixumrichter neun Hauptmodule. Ein erstes Hauptmodul erstreckt sich zwischen einer ersten Phasenleitung und einem ersten Ausgang des Matrixumrichters bzw. einem ersten Sternpunkt des Matrixumrichters. Ein zweites Hauptmodul erstreckt sich zwischen einer zweiten Phasenleitung und dem ersten Ausgang des Matrixumrichters. Ein drittes Hauptmodul erstreckt sich zwischen einer dritten Phasenleitung und dem ersten Ausgang des Matrixumrichters. Ein viertes Hauptmodul erstreckt sich zwischen der ersten Phasenleitung und einem zweiten Ausgang des Matrixumrichters bzw. einem zweiten Sternpunkt des Matrixumrichters. Ein fünftes Hauptmodul erstreckt sich zwischen der zweiten Phasenleitung und dem zweiten Ausgang des Matrixumrichters. Ein sechstes Hauptmodul erstreckt sich zwischen der dritten Phasenleitung und dem zweiten Ausgang des Matrixumrichters. Ein siebtes Hauptmodul erstreckt sich zwischen der ersten Phasenleitung und einem dritten Ausgang des Matrixumrichters bzw. einem dritten Sternpunkt des Matrixumrichters. Ein achtes Hauptmodul erstreckt sich zwischen der zweiten Phasenleitung und dem dritten Ausgang des Matrixumrichters. Ein neuntes Hauptmodul erstreckt sich zwischen der dritten Phasenleitung und dem dritten Ausgang des Matrixumrichters. Der erste Sternpunkt ist mit dem ersten Ausgang des Matrixumrichters verbunden. Entsprechend sind der zweite Sternpunkt mit dem zweiten Ausgang und der dritte Sternpunkt mit dem dritten Ausgang des Matrixumrichters verbunden.

Die Schaltmodule des Matrixumrichters sind bevorzugt Vollbrücken-Schaltmodule. Die Vollbrücken-Schaltmodule umfassen jeweils eine erste und eine zweite Schaltmodulklemme sowie eine Brückenschaltung zwischen den Schaltmodulklemmen mit vier selbstgeführten Leistungshalbleiterschaltern und einem Brückenzweig, in dem jeweils ein Energiespeicher, vorzugsweise in Form eines Speicherkondensators angeordnet ist. Die Leistungshalbleiterschalter der Schaltmodule sind jeweils unabhängig von den Leistungshalbleiterschaltern der anderen Schaltmodule des Matrixumrichters schaltbar. Die Leistungshalbleiterschalter sind bevorzugt abschaltbare Halbleiterschalter wie IGBTs, IGCTs oder andere geeignete Halbleiterschaltelemente. Sie können eine integrierte Freilaufdiode aufweisen.

Geeigneterweise liegt die Anzahl der Schaltmodule in jedem Hauptmodul zwischen 10 und 100. Auf diese Weise lassen sich mittels der Umrichteranordnung Spannungen von mehreren Hundert Volt, insbesondere oberhalb von 10 kV erzeugen.

Gemäß einer Ausführungsform der Erfindung ist eine erste Betriebsfrequenz an einem Eingangsanschluss der Umrichteranordnung niedriger als eine zweite Betriebsfrequenz an einem Ausgangsanschluss der Umrichteranordnung. Die eingangsseitige Betriebsfrequenz entspricht zweckmäßigerweise der Netzfrequenz des Versorgungsnetzes (z.B. 50 Hz oder 60 Hz). Die ausgangsseitige Betriebsfrequenz kann beispielsweise 70 Hz betragen. Die ausgangsseitige Betriebsfrequenz kann damit an die jeweilige Anwendung, insbesondere die jeweils zu versorgende Last, angepasst werden.

Bevorzugt umfasst die Umrichteranordnung ferner eine erste Zuschaltvorrichtung, die eingangsseitig des Matrixumrichters angeordnet ist und/oder eine zweite Zuschaltvorrichtung, die ausgangsseitig des Matrixumrichters angeordnet ist. Mittels der ausgangsseitig (lastseitig) des Matrixumrichters angeordnete Zuschaltvorrichtung (mit mechanischen Schaltern) lässt sich der Matrixumrichter für den Vorgang des Vorladens von der Last abkoppeln. Mittels der eingangsseitigen (netzseitigen) Zuschaltvorrichtung können der Matrixumrichter und die Vorladeeinrichtung zur Durchführung von Schaltvorgängen in der Vorladeeinrichtung vom Netz abgekoppelt werden.

Die Erfindung betrifft ferner ein Verfahren zum Betreiben einer Umrichteranordnung mit einem modularen Matrixumrichter.

Die Aufgabe der Erfindung ist es, ein solches Verfahren anzugeben, das möglichst zuverlässig und kostengünstig ist, insbesondere im Hinblick auf eine Vorladung des Matrixumrichters.

Die Aufgabe wird durch ein Verfahren mit den Merkmalen des Patentanspruchs 15 gelöst.

Der Matrixumrichter umfasst dazu Schaltmodule, die jeweils Leistungshalbleiterschalter sowie einen schaltmoduleigenen Energiespeicher aufweisen, und ist netzseitig mit einer zumindest dreiphasigen Wechselspannungsverbindung verbunden. Die Umrichteranordnung umfasst ferner eine Vorladeeinrichtung zum Vorladen der Energiespeicher des Matrixumrichters, wobei die Vorladeeinrichtung wenigstens ein Vorlademodul umfasst, das netzseitig mit genau zwei Phasenleitungen der Wechselspannungsverbindung und lastseitig mit einem ersten Ausgang des Matrixumrichters verbunden ist, und das Schaltelemente umfasst, mittels deren die beiden Phasenleitungen jeweils mit dem ersten Ausgang des Matrixumrichters verbindbar sind. Erfindungsgemäß wird zum Vorladen der Energiespeicher der Matrixumrichter lastseitig mittels der Vorladeeinrichtung sequenziell (nacheinander) mit zwei (unterschiedlichen) Phasenleitungen der Wechselspannungsverbindung verbunden.

Zum Beispiel kann durch eine entsprechende Schalthandlung mittels eines Schaltelements des Vorlademoduls zunächst der erste Ausgang (Ausgangsanschluss) des Matrixumrichters (bzw. der erste Sternpunkt des Matrixumrichters) mit der ersten Phasenleitung der Wechselspannungsverbindung verbunden werden. Dadurch können die Energiespeicher derjenigen Hauptmodule des Matrixumrichters geladen werden, die sich zwischen dem ersten Sternpunkt und der zweiten und der dritten Phasenleitung erstrecken. Danach wird diese Verbindung getrennt und der erste Ausgang des Matrixumrichters wird mit der zweiten Phasenleitung verbunden, wodurch die Energiespeicher des übrigen Hauptmoduls geladen werden können. Entsprechend kann auch mit den Energiespeichern der anderen Umrichtereinheiten verfahren werden.

Die Vorteile des erfindungsgemäßen Verfahrens ergeben sich insbesondere aus den bereits im Zusammenhang mit der erfindungsgemäßen Umrichteranordnung beschriebenen Vorteilen.

Die Erfindung wird nachfolgend anhand der in den Figuren 1 bis 10 dargestellten Ausführungsbeispielen weiter erläutert.
Figur 1 zeigt ein erstes Ausführungsbeispiel einer erfindungsgemäßen Umrichteranordnung in einer schematischen Darstellung;
Figur 2 zeigt ein zweites Ausführungsbeispiel einer erfindungsgemäßen Umrichteranordnung in einer schematischen Darstellung;
Figur 3 zeigt ein Ablaufdiagramm eines Ausführungsbeispiels eines erfindungsgemäßen Verfahrens in einer schematischen Darstellung;
Figur 4 zeigt ein drittes Ausführungsbeispiel einer erfindungsgemäßen Umrichteranordnung in einer schematischen Darstellung;
Figur 5 zeigt ein Ablaufdiagramm eines weiteren Ausführungsbeispiels eines erfindungsgemäßen Verfahrens in einer schematischen Darstellung;
Figur 6 zeigt ein erstes Ausführungsbeispiel eines Vorlademoduls in einer schematischen Darstellung;
Figur 7 zeigt ein zweites Ausführungsbeispiel eines Vorlademoduls in einer schematischen Darstellung;
Figur 8 zeigt ein drittes Ausführungsbeispiel eines Vorlademoduls in einer schematischen Darstellung;
Figur 9 zeigt ein Ausführungsbeispiel eines Schaltmoduls in einer schematischen Darstellung;
Figur 10 zeigt ein weiteres Ausführungsbeispiel einer erfindungsgemäßen Umrichteranordnung in einer schematischen Darstellung.

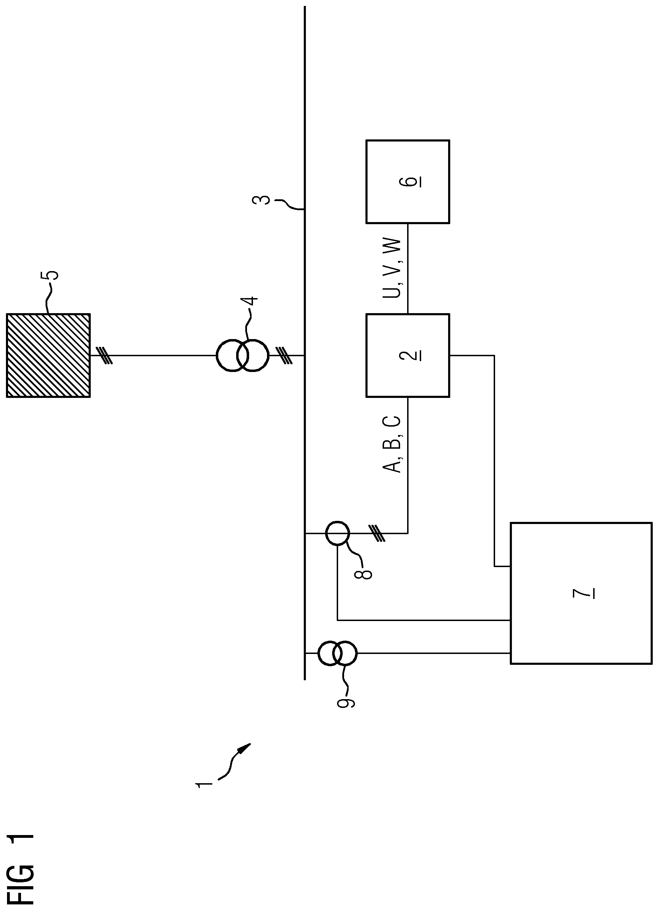

Figur 1 zeigt eine Umrichteranordnung 1 mit einem Matrixumrichter 2. Der Matrixumrichter 2 ist netzseitig (eingangsseitig) mittels Eingangsanschlüssen A,B,C mit einer dreiphasigen Wechselspannungsverbindung 3 verbunden (im dargestellten Beispiel durch eine Anschlussschiene gegeben). Die Wechselspannungsverbindung 3 ist über einen Netztransformator 4 mit einem Versorgungsnetz 5 verbunden. Lastseitig (ausgangsseitig) ist der Matrixumrichter 2 mittels ausgangsseitiger Anschlüsse U,V,W mit einer Drehstromlast 6 verbunden (beispielsweise einem Elektrolichtbogenofen). Eine Vorladeeinrichtung zum Vorladen des Matrixumrichters 2 ist in diesem Fall in den Matrixumrichter 2 integriert. Die Umrichteranordnung 1 umfasst ferner eine Umrichtersteuereinheit 7 zum Steuern und Regeln der Umrichteranordnung, wozu die Umrichtersteuereinheit insbesondere mit einer Strommesseinrichtung 8 und mit einer Spannungsmesseinrichtung 9 verbunden ist. Im Betrieb der Umrichteranordnung 1 weist die Wechselspannungsverbindung 3 eine Betriebsspannung von 30kV (üblicherweise kann die Betriebsspannung in vielen Fällen im Bereich von 10 kV - 40 kV liegen) und einen Strom von 2,5kA auf.

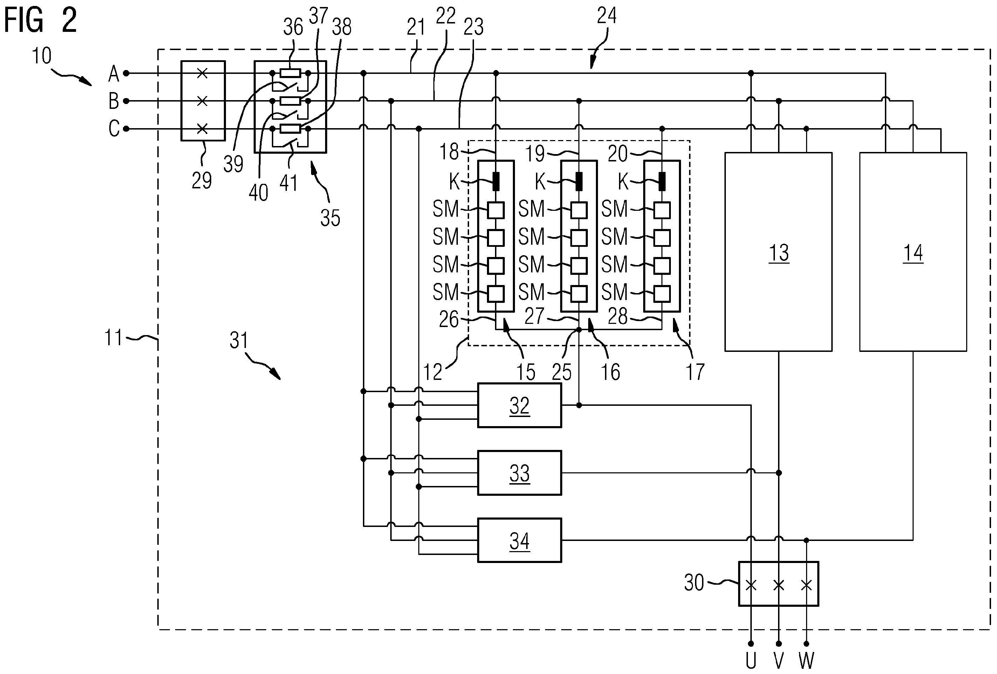

Figur 2 zeigt eine Umrichteranordnung 10 mit einem modularen Matrixumrichter 11. Der Matrixumrichter 11 weist eine Netzseite mit netzseitigen Anschlüssen A,B,C auf, die den Matrixumrichter 11 mit einer Wechselspannungsverbindung verbinden können. Ferner weist der Matrixumrichter 11 eine Lastseite mit lastseitigen Anschlüssen U,V,W auf, die den Matrixumrichter 11 mit einer Last verbinden können.

Der Matrixumrichter weist drei Umrichtereinheiten 12,13,14 auf, die zwischen den netzseitigen und den lastseitigen Anschlüssen angeordnet sind. Eine erste Umrichtereinheit 12 umfasst drei Hauptmodule 15, 16, 17, wobei die Hauptmodule jeweils einen Eingangsanschluss 18, 19, 20 aufweisen, der jeweils mit einer Phasenleitung 21, 22, 23 der Wechselspannungsverbindung 24 verbunden ist. Die erste Umrichtereinheit 12 weist einen ersten Sternpunkt 25 auf, der einerseits mit einem jeweiligen Ausgangsanschluss 26, 27, 28 der Hauptmodule der ersten Umrichtereinheit 12 und andererseits mit einem ersten ausgangsseitigen Anschluss U des Matrixumrichters verbunden ist. Die Hauptmodule 15, 16, 17 umfassen jeweils eine Reihenschaltung einer Koppelinduktivität K und einer Mehrzahl der Schaltmodule SM. In dem in Figur 2 dargestellten Beispiel weisen die Hauptmodule 15-17 jeweils vier Schaltmodule SM auf, deren Zahl ist jedoch grundsätzlich beliebig und kann an die jeweilige Anwendung (insbesondere an die erforderliche Spannung) angepasst sein.

Die zweite und die dritte Umrichtereinheit 13, 14 sind zur ersten Umrichtereinheit 12 gleichartig aufgebaut. Die zweite Umrichtereinheit 13 erstreckt sich zwischen der Wechselspannungsverbindung 24 und einem zweiten Ausgangsanschluss V und die dritte Umrichtereinheit 14 erstreckt sich zwischen der Wechselspannungsverbindung 24 und einem dritten Ausgangsanschluss W.

Ferner umfasst die Umrichteranordnung 10 eine erste mechanische Zuschaltvorrichtung 29, die eingangsseitig des Matrixumrichters angeordnet ist, und eine zweite mechanische Zuschaltvorrichtung 30, die ausgangsseitig des Matrixumrichters angeordnet ist.

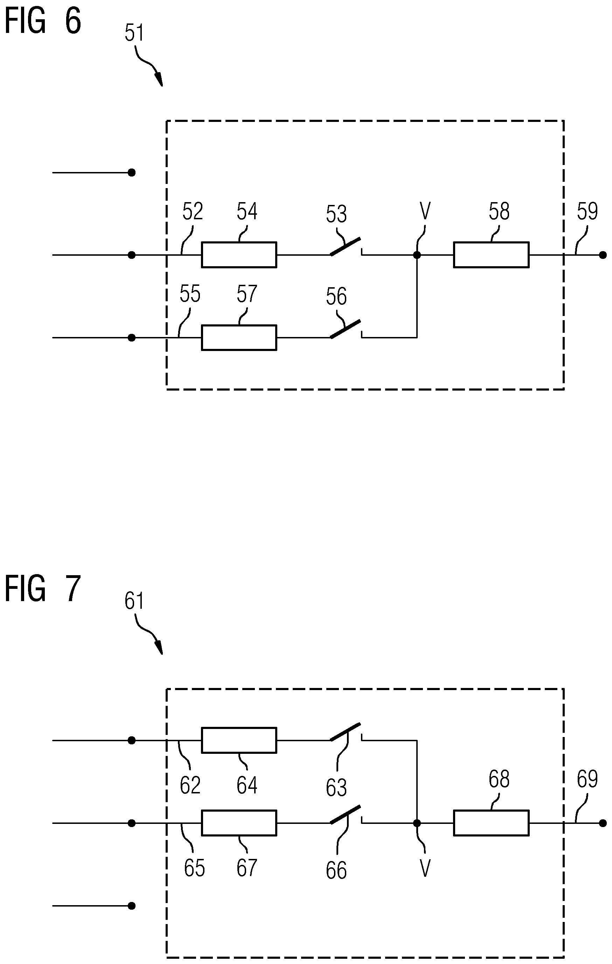

Die Umrichteranordnung 10 umfasst ferner eine Vorladeeinrichtung 31 zum Vorladen der Energiespeicher der Schaltmodule SM. Die Vorladeeinrichtung 31 umfasst drei Vorlademodule 32, 33, 34. Obwohl in Figur 2 graphisch eingangsseitige Verbindungen der Vorlademodule 32,33,34 mit allen drei Phasenleitungen 21-23 der Wechselspannungsverbindung 24 dargestellt sind, ist jedes Vorlademodul jeweils mit genau zwei Phasenleitungen der Wechselspannungsverbindung verbunden. Dies wird aus den Darstellungen der Figuren 6-8 ersichtlich, wo auf den Aufbau der Vorlademodule 32-34 eingegangen wird. Die Vorlademodule 32-34 sind lastseitig mit jeweils einem Ausgang U,V bzw. W des Matrixumrichters verbunden.

Die Vorladeeinrichtung umfasst zudem eine Vorladewiderstandsschaltung 35. Die Vorladewiderstandsschaltung 35 weist Widerstandselemente 36, 37, 38 auf, die jeweils in einer Phasenleitung 21-23 der Wechselspannungsverbindung 24 angeordnet sind und mittels eines ihnen jeweils zugeordneten Überbrückungsschaltelements 39,40,41 überbrückbar sind.

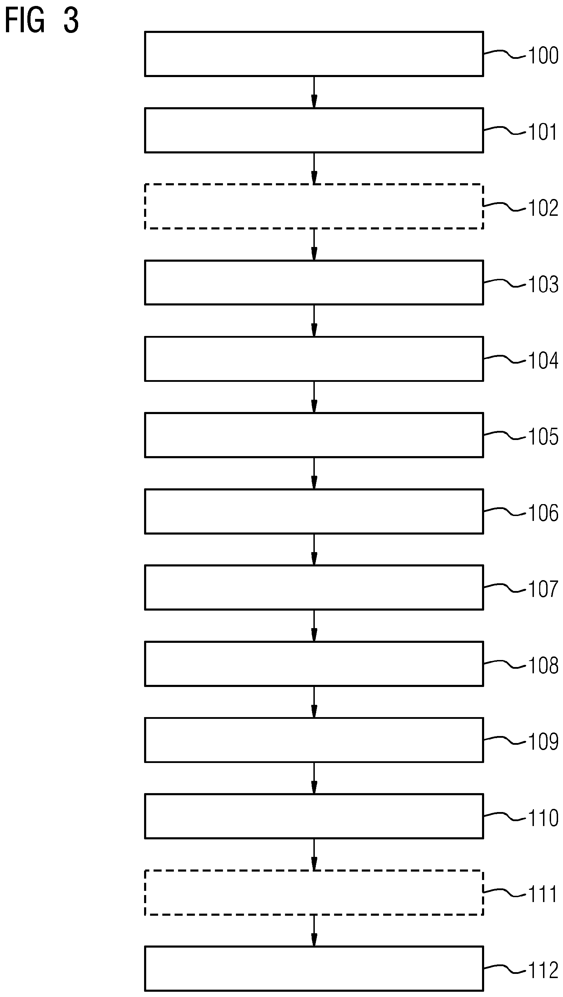

Figur 3 zeigt ein Ablaufdiagramm für ein Verfahren zum Betreiben einer Umrichteranordnung (beispielsweise der Umrichteranordnung 10 der Figur 2). Dargestellt ist die Ablaufsequenz zum Vorladen von Umrichteranordnung 10 bei deren Inbetriebnahme.

In einem Ausgangszustand 100 ist der Matrixumrichter 11 bzw. die Energiespeicher C der Schaltmodule SM entladen.

In einem ersten Schritt 101 werden die Schalter der zweiten Zuschaltvorrichtung 30 geöffnet.

In einem zweiten Schritt 102 werden die Überbrückungsschaltelemente 39-41 der Vorladewiderstandsschaltung 35 geöffnet.

In einem dritten Schritt 103 wird jeweils das erste Schaltelement 53,63,73 (vgl. Figuren 6-8) der Vorlademodule 32-34 geschlossen, und jeweils das zweite Schaltelement 56,66,76 der Vorlademodule 32-34 wird (bzw. bleibt) geöffnet.

In einem vierten Schritt 104 werden die Schalter der ersten Zuschaltvorrichtung 29 geschlossen.

In einem fünften Schritt 105 wird eine vorbestimmte Zeit gewartet, typischerweise 10-60 Sekunden.

In einem sechsten Schritt 106 werden die Schalter der ersten Zuschaltvorrichtung 29 geöffnet. In einer besonderen Ausführung, bei der die Schaltelemente 53,63,73,56,66,76 als Leistungsschalter ausgeführt sind, kann auf diesen Schritt verzichtet werden. Dadurch kann die Schaltzeit eingespart werden.

In einem siebten Schritt 107 wird jeweils das erste Schaltelement 53,63,73 (vgl. Figuren 6-8) der Vorlademodule 32-34 geöffnet, und jeweils das zweite Schaltelement 56,66,76 der Vorlademodule 32-34 wird geschlossen.

In einem achten Schritt 108 werden die Schalter der ersten Zuschaltvorrichtung 29 geschlossen.

In einem neunten Schritt 109 wird eine vorbestimmte Zeit gewartet, typischerweise 10-60 Sekunden.

In einem zehnten Schritt 110 werden alle Schaltelemente der Vorlademodule geöffnet.

In einem elften Schritt 111 werden die Überbrückungsschaltelemente 39-41 der Vorladewiderstandsschaltung 35 geschlossen.

In einem zwölften Schritt 112 werden die Schalter der zweiten Zuschaltvorrichtung 30 geschlossen.

Drei der neun Hauptmodule des Matrixumrichters können bei dem oben beschriebenen Verfahren mehrfach geladen beziehungsweise nachgeladen werden.

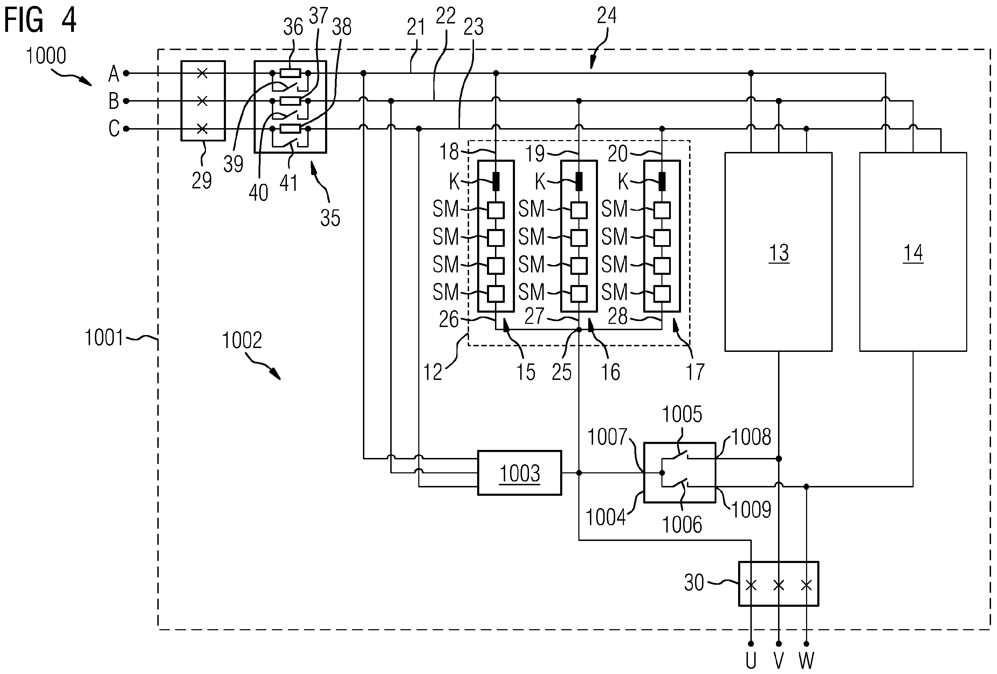

Figur 4 zeigt eine Umrichteranordnung 1000 mit einem modularen Matrixumrichter 1001. Gleiche und gleichartige Elemente der Umrichteranordnung 1 der Figur 1 und der Umrichteranordnung 1000 sind mit gleichen Bezugszeichen versehen. Aus Gründen der Übersichtlichkeit wird nachfolgend lediglich auf Unterschiede zwischen der Umrichteranordnung 1 und der Umrichteranordnung 1000 näher eingegangen.

Die Umrichteranordnung 1000 umfasst eine Vorladeeinrichtung 1002 mit einem Vorlademodul 1003 und einer Umschalteinrichtung 1004. Das Vorlademodul 1003 kann gleichartig zu einem der in den Figuren 6 bis 8 gezeigten Vorlademodulen 51, 61, 71 aufgebaut sein.

Mittels der Umschalteinrichtung 1004 kann der erste Ausgang des Matrixumrichters mit einem zweiten und mit einem dritten Ausgang des Matrixumrichters verbunden werden. Die Umschalteinrichtung 1004 weist einen Eingang 1007 und zwei Ausgänge 1008, 1009 auf. Der Eingang 1007 ist mit einem ersten Ausgang 1008 mittels eines ersten Umschalters 1005 und mit einem zweiten Ausgang 1009 mittels eines zweiten Umschalters 1006 verbunden. Der erste Ausgang 1008 des Umschaltmoduls 1004 ist mit dem zweiten Ausgang V des Matrixumrichters und der zweite Ausgang 1009 des Umschaltmoduls 1004 ist mit dem dritten Ausgang W des Matrixumrichters verbunden.

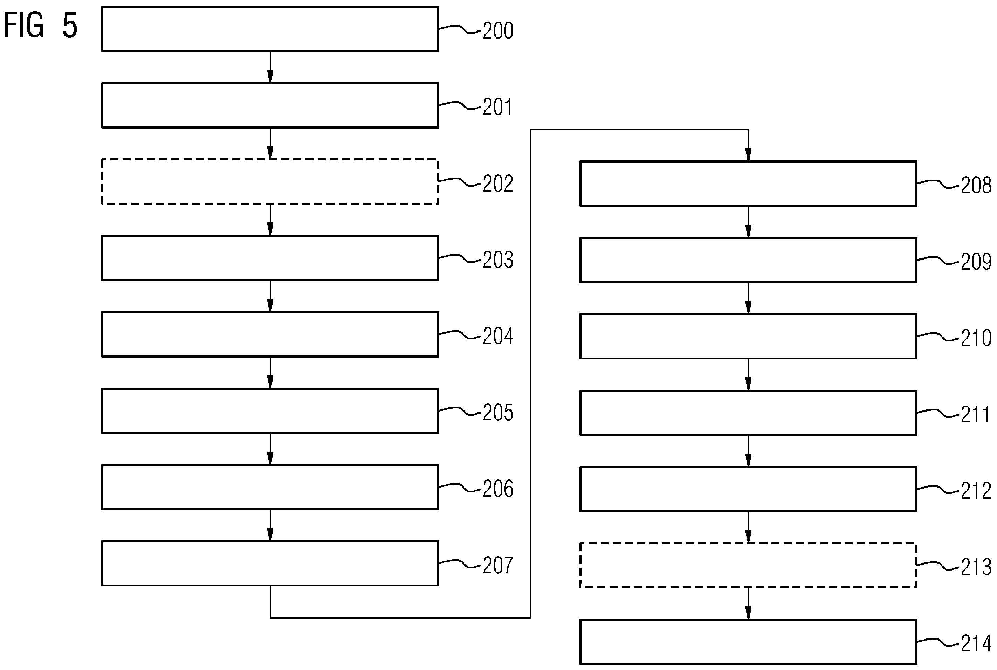

Figur 5 zeigt ein Ablaufdiagramm für ein Verfahren zum Betreiben einer Umrichteranordnung (beispielsweise der Umrichteranordnung 1000 der Figur 4). Dargestellt ist die Ablaufsequenz zum Vorladen von Umrichteranordnung 1000 bei deren Inbetriebnahme.

In einem Ausgangszustand 200 ist der Matrixumrichter 11 bzw. die Energiespeicher C der Schaltmodule SM entladen.

In einem ersten Schritt 201 werden die Schalter der zweiten Zuschaltvorrichtung 30 geöffnet.

In einem zweiten Schritt 202 werden die Überbrückungsschaltelemente 39-41 der Vorladewiderstandsschaltung 35 geöffnet.

In einem dritten Schritt 203 werden die Umschalter 1005, 1006 der Umschalteinrichtung 1004 geschlossen.

In einem vierten Schritt 204 wird das erste Schaltelement 53,63,73 (vgl. Figuren 6-8) des Vorlademoduls 1003 geschlossen, und das zweite Schaltelement 56,66,76 des Vorlademoduls 1003 wird (bzw. bleibt) geöffnet.

In einem fünften Schritt 205 werden die Schalter der ersten Zuschaltvorrichtung 29 geschlossen.

In einem sechsten Schritt 206 wird eine vorbestimmte Zeit gewartet, typischerweise 10-60 Sekunden.

In einem siebten Schritt 207 werden die Schalter der ersten Zuschaltvorrichtung 29 geöffnet. In einer besonderen Ausführung, bei der die Schaltelemente 53,63,73,56,66,76 als Leistungsschalter ausgeführt sind, kann auf diesen Schritt verzichtet werden. Dadurch kann die Schaltzeit eingespart werden.

In einem achten Schritt 208 wird das erste Schaltelement 53,63,73 (vgl. Figuren 6-8) des Vorlademoduls 1003 geöffnet, und das zweite Schaltelement 56,66,76 des Vorlademoduls 1003 wird geschlossen.

In einem neunten Schritt 209 werden die Schalter der ersten Zuschaltvorrichtung 29 geschlossen.

In einem zehnten Schritt 210 wird eine vorbestimmte Zeit gewartet, typischerweise 10-60 Sekunden.

In einem elften Schritt 211 werden beide Schaltelemente des Vorlademoduls geöffnet.

In einem zwölften Schritt 212 werden die Umschalter 1005, 1006 der Umschalteinrichtung 1004 geöffnet.

In einem dreizehnten Schritt 213 werden die Überbrückungsschaltelemente 39-41 der Vorladewiderstandsschaltung 35 geschlossen.

In einem vierzehnten Schritt 214 werden die Schalter der zweiten Zuschaltvorrichtung 30 geschlossen.

Drei der neun Hauptmodule des Matrixumrichters können bei dem oben beschriebenen Verfahren mehrfach geladen beziehungsweise nachgeladen werden.

Figur 6 zeigt ein Vorlademodul 51, das für die Umrichteranordnungen der Figuren 2 und 4 bzw. deren Vorladeeinrichtungen geeignet ist. Das Vorlademodul 51 umfasst einen ersten Vorladezweig 52, der die zweite Phasenleitung 22 der Wechselspannungsverbindung 24 (vgl. Figur 2) mit einem Ausgang U,V oder W des Matrixumrichters verbindet. In dem ersten Vorladezweig 52 ist ein erstes Schaltelement 53 (ein Leistungs- oder ein Trennschalter) angeordnet. In Reihe zum ersten Schaltelement 53 ist ein erstes Widerstandselement 54 angeordnet. Das Vorlademodul umfasst zudem einen zweiten Vorladezweig 55, der die dritte Phasenleitung 23 der Wechselspannungsverbindung 24 mit dem Ausgang des Matrixumrichters verbindet, und in dem ein zweites Schaltelement 56 und ein zweites Widerstandselement 57 angeordnet sind. Ein drittes Widerstandselement 58 ist ferner zwischen einem Verbindungspunkt V der beiden Vorladezweige 52, 55 und einem Ausgang 59 des Vorlademoduls 51 angeordnet. Die Widerstandselemente 54, 57, 58 haben in dem hier dargestellten Beispiel jeweils einen Widerstandswert von 700hm. Im Allgemeinen ist die Höhe des Widerstandswertes vor allem von der verfügbaren Spannung (Nennspannung des Netzes) und dem maximal zulässigen Strom zu Beginn des Vorladens abhängig.

Es ist für die in den Figuren dargestellten Beispiele ferner anzumerken, dass, wenn die Vorladeschaltung 35 vorhanden ist, die Widerstandselemente in den Vorlademodulen nicht notwendig. Falls die Vorladeschaltung 35 nicht vorhanden ist, dann müssen nicht alle drei Widerstandselemente vorhanden sein. Man braucht dann aber min ein Widerstandselement pro parallelen Zweig. Also z.B. entweder mindestens 58 oder mindestens 54 und 57.

Figur 7 zeigt ein Vorlademodul 61, das für die Umrichteranordnungen der Figuren 2 und 4 bzw. deren Vorladeeinrichtungen geeignet ist. Das Vorlademodul 61 umfasst einen ersten Vorladezweig 62, der die erste Phasenleitung 21 der Wechselspannungsverbindung 24 (vgl. Figur 2) mit einem Ausgang U,V oder W des Matrixumrichters verbindet. In dem ersten Vorladezweig 62 ist ein erstes Schaltelement 63 (ein Leistungs- oder ein Trennschalter) angeordnet. In Reihe zum ersten Schaltelement 63 ist ein erstes Widerstandselement 64 angeordnet. Das Vorlademodul umfasst zudem einen zweiten Vorladezweig 65, der die zweite Phasenleitung 22 der Wechselspannungsverbindung 24 mit dem Ausgang des Matrixumrichters verbindet, und in dem ein zweites Schaltelement 66 und ein zweites Widerstandselement 67 angeordnet sind. Ein drittes Widerstandselement 68 ist ferner zwischen einem Verbindungspunkt V der beiden Vorladezweige 62, 65 und einem Ausgang 69 des Vorlademoduls 61 angeordnet. Die Widerstandselemente 64, 67, 68 haben jeweils einen Widerstandswert von 700hm.

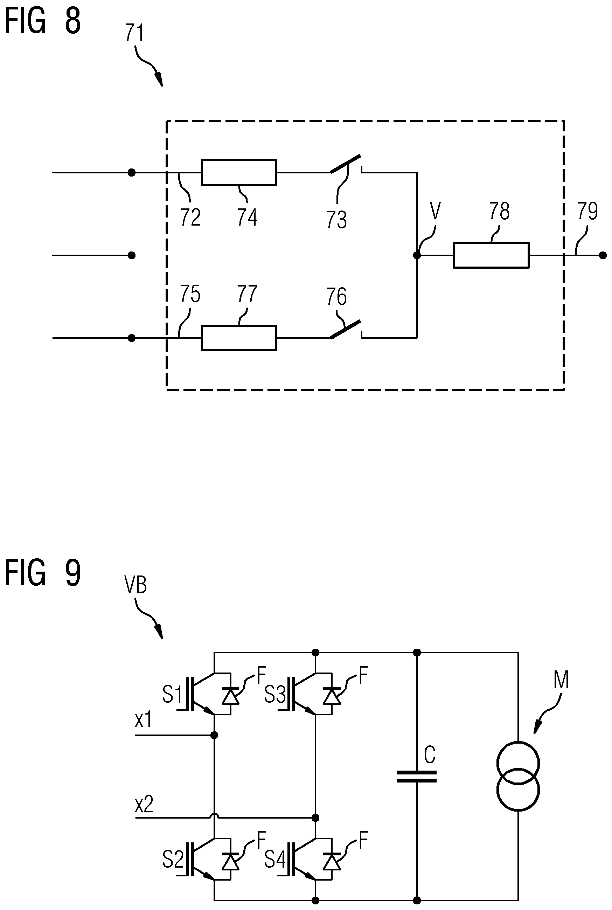

Figur 8 zeigt ein Vorlademodul 71, das für die Umrichteranordnungen der Figuren 2 und 4 bzw. deren Vorladeeinrichtungen geeignet ist. Das Vorlademodul 71 umfasst einen ersten Vorladezweig 72, der die erste Phasenleitung 21 der Wechselspannungsverbindung 24 (vgl. Figur 2) mit einem Ausgang U,V oder W des Matrixumrichters verbindet. In dem ersten Vorladezweig 72 ist ein erstes Schaltelement 73 (ein Leistungs- oder ein Trennschalter) angeordnet. In Reihe zum ersten Schaltelement 73 ist ein erstes Widerstandselement 74 angeordnet. Das Vorlademodul umfasst zudem einen zweiten Vorladezweig 75, der die dritte Phasenleitung 23 der Wechselspannungsverbindung 24 mit dem Ausgang des Matrixumrichters verbindet, und in dem ein zweites Schaltelement 76 und ein zweites Widerstandselement 77 angeordnet sind. Ein drittes Widerstandselement 78 ist ferner zwischen einem Verbindungspunkt V der beiden Vorladezweige 72, 75 und einem Ausgang 79 des Vorlademoduls 71 angeordnet. Die Widerstandselemente 74, 77, 78 haben jeweils einen Widerstandswert von 700hm.

Figur 9 zeigt ein Vollbrücken-Schaltmodul VB. Das Vollbrücken-Schaltmodul VB umfasst jeweils eine erste und eine zweite Schaltmodulklemme X1, X2 sowie eine Brückenschaltung zwischen den Schaltmodulklemmen X1, X2 mit vier selbstgeführten (abschaltbaren) Leistungshalbleiterschaltern S1-S4, denen jeweils eine Freilaufdiode F antiparallel geschaltet ist, und einem Brückenzweig, in dem ein Energiespeicher in Form eines Speicherkondensators C angeordnet ist. Die Leistungshalbleiterschalter S1-S4 sind bevorzugt abschaltbare Halbleiterschalter wie IGBTs, IGCTs oder andere geeignete Halbleiterschaltelemente. Parallel zum Speicherkondensator C ist eine Spannungsmesseinrichtung M angeordnet.

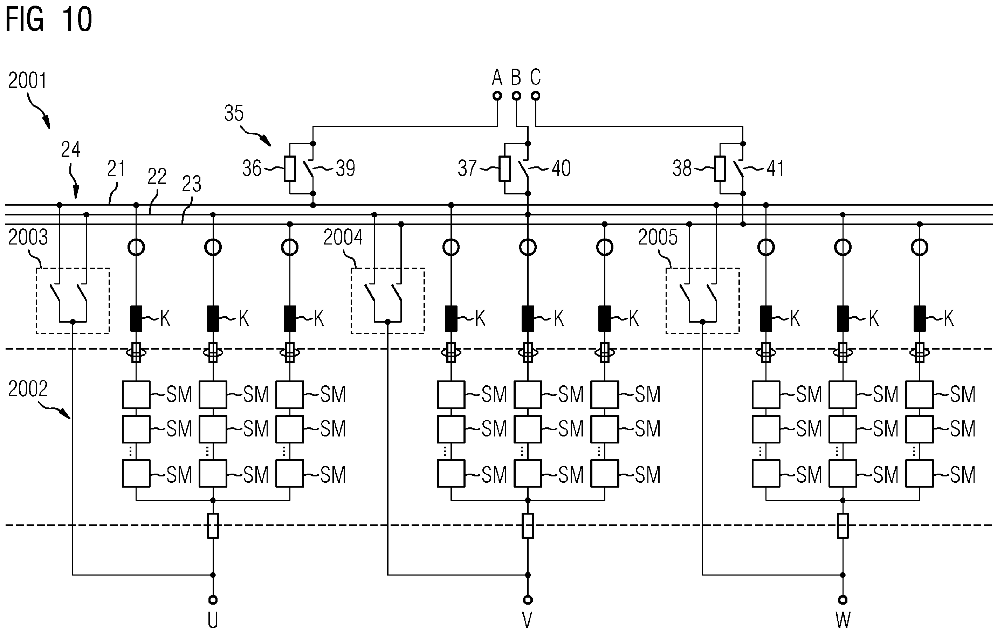

Eine weitere Umrichteranordnung 2001 mit einem Matrixumrichter 2002 ist in Figur 10 gezeigt. Aus Gründen der Übersichtlichkeit sind gleiche Bauteile und Bauelemente der Figuren 2 und 10 mit gleichen Bezugszeichen versehen. Ähnlich zu der Ausführungsform der Figur 2 umfasst auch die Vorladeeinrichtung der Umrichteranordnung 2001 eine Vorladewiderstandsschaltung 35. Ferner umfasst die Vorladeeinrichtung ein erstes, ein zweites und ein drittes Vorlademodul 2003, 2004, 2005. Mittels des ersten Vorlademoduls 2003 sind eine erste und eine zweite Phasenleitung 21, 22 einer Wechselspannungsverbindung 24 mit einem ersten Ausgang U des Matrixumrichters 2002 verbindbar. Mittels des zweiten Vorlademoduls 2004 sind die zweite und eine dritte Phasenleitung 22, 23 mit einem zweiten Ausgang V des Matrixumrichters 2002 verbindbar. Mittels des dritten Vorlademoduls 2005 sind die dritte und die erste Phasenleitung 23, 21 mit einem dritten Ausgang W des Matrixumrichters 2002 verbindbar. Gemäß diesem Beispiel weisen die Vorlademodule 2003-2005 keine Widerstandselemente auf. Die Stromspitzen können hierbei mittels der Widerstände 36, 37 und 38 begrenzt werden.

## Patentansprüche

1. Umrichteranordnung (10, 1000) mit einem modularen Matrixumrichter (11, 1001), wobei der Matrixumrichter (11, 1001) Schaltmodule (SM) umfasst, die jeweils Leistungshalbleiterschalter (S1-S4) sowie einen Energiespeicher (C) aufweisen, und der netzseitig mit einer zumindest dreiphasigen Wechselspannungsverbindung (24) verbunden ist, **gekennzeichnet durch** eine Vorladeeinrichtung (31, 1002) zum Vorladen der Energiespeicher (C), wobei die Vorladeeinrichtung (31, 1002) wenigstens ein Vorlademodul (32, 1003) umfasst, das netzseitig mit genau zwei Phasenleitungen (21,22) der Wechselspannungsverbindung (24) und lastseitig mit einem ersten Ausgang (U) des Matrixumrichters (11, 1001) verbunden ist, und das Schaltelemente (53, 56) umfasst, mittels deren die beiden Phasenleitungen (21,22) jeweils mit dem ersten Ausgang (U) des Matrixumrichters (11, 1001) verbindbar sind.

2. Umrichteranordnung (1000) nach Anspruch 1, wobei die Vorladeeinrichtung (1002) ferner eine Umschalteinrichtung (1004) umfasst, mittels der der erste Ausgang des Matrixumrichters (1001) mit einem zweiten und mit einem dritten Ausgang des Matrixumrichters (1001) verbindbar ist.

3. Umrichteranordnung (10) nach einem der vorangehenden Ansprüche, wobei das wenigstens eine Vorlademodul (32-34) ein erstes Vorlademodul (32) ist, wobei die Vorladeeinrichtung (31) ferner ein zweites Vorlademodul (33) umfasst, das netzseitig mit genau zwei Phasenleitungen der Wechselspannungsverbindung (24) und lastseitig mit einem zweiten Ausgang (V) des Matrixumrichters verbunden ist, und das Schaltelemente umfasst, mittels deren die beiden Phasenleitungen jeweils mit dem zweiten Ausgang des Matrixumrichters verbindbar sind.

4. Umrichteranordnung (10) nach einem der vorangehenden Ansprüche, wobei das wenigstens eine Vorlademodul (32)
- einen ersten Vorladezweig (52) umfasst, der eine erste Phasenleitung der Wechselspannungsverbindung mit dem ersten Ausgang des Matrixumrichters verbindet, und in dem ein erstes Schaltelement (53) angeordnet ist, und
- einen zweiten Vorladezweig (55) umfasst, der eine zweite Phasenleitung der Wechselspannungsverbindung mit dem ersten Ausgang des Matrixumrichters verbindet, und in dem ein zweites Schaltelement (56) angeordnet ist.

5. Umrichteranordnung (10) nach einem der vorangehenden Ansprüche, wobei wenigstens ein Schaltelement (53, 56) des wenigstens einen Vorlademoduls (32) ein Leistungsschalter ist.

6. Umrichteranordnung (10) nach einem der vorangehenden Ansprüche, wobei wenigstens ein Schaltelement (53, 56) des wenigstens einen Vorlademoduls (32) ein Trennschalter ist.

7. Umrichteranordnung (10) nach einem der vorangehenden Ansprüche, wobei das wenigstens eine Vorlademodul (32) Widerstandselemente (54, 57, 58) zur Spitzenstrombegrenzung aufweist.

8. Umrichteranordnung (10) nach Anspruch 7, wobei zu jedem der Schaltelemente (53, 56) des wenigstens einen Vorlademoduls (32) ein Widerstandselement (54, 57) in Reihe geschaltet ist.

9. Umrichteranordnung (10) nach einem der Ansprüche 7 oder 8, wobei die Widerstandselemente (54, 57) jeweils einen Widerstandswert von 10 Ohm bis 100 Ohm aufweisen.

10. Umrichteranordnung (10) nach einem der vorangehenden Ansprüche, wobei die Vorladeeinrichtung (31) ferner eine Vorladewiderstandsschaltung (35) umfasst, wobei die Vorladewiderstandsschaltung (35) Widerstandselemente (36-38) aufweist, die jeweils in einer Phasenleitung der Wechselspannungsverbindung (24) angeordnet sind und mittels mindestens eines Überbrückungsschaltelements (39-41) überbrückbar sind.

11. Umrichteranordnung (10) nach einem der vorangehenden Ansprüche, wobei der Matrixumrichter (11) eine Mehrzahl von Umrichtereinheiten (12-14) aufweist, wobei die Umrichtereinheiten (12-14) jeweils eine Mehrzahl an Hauptmodulen (15-17) aufweisen, wobei die Hauptmodule (15-17) jeweils einen Eingangsanschluss (18-20) aufweisen, der jeweils mit einer Phasenleitung (21-23) der Wechselspannungsverbindung (24) verbunden ist, wobei die Umrichtereinheiten (12-14) jeweils einen Sternpunkt (25) aufweisen, der einerseits mit einem jeweiligen Ausgangsanschluss (26-28) der Hauptmodule (15-17) der jeweiligen Umrichtereinheit (12-14) und andererseits mit einem der Ausgänge (U,V,W) des Matrixumrichters (11) verbunden ist, wobei die Hauptmodule (15-17) jeweils eine Reihenschaltung einer Koppelinduktivität (K) und einer Mehrzahl der Schaltmodule (SM) aufweisen.

12. Umrichteranordnung (10) nach Anspruch 11, wobei die Anzahl der Schaltmodule (SM) in jedem Hauptmodul zwischen 10 und 100 liegt.

13. Umrichteranordnung (10) nach einem der vorangehenden Ansprüche, wobei eine erste Betriebsfrequenz an einem Eingangsanschluss (A,B,C) der Umrichteranordnung (10) niedriger ist als eine zweite Betriebsfrequenz an einem Ausgangsanschluss (U,V,W) der Umrichteranordnung (10).

14. Umrichteranordnung (10) nach einem der vorangehenden Ansprüche, wobei die Umrichteranordnung (10) ferner eine erste Zuschaltvorrichtung (29) umfasst, die eingangsseitig des Matrixumrichters (11) angeordnet ist, und/oder eine zweite Zuschaltvorrichtung (30), die ausgangsseitig des Matrixumrichters (11) angeordnet ist.

15. Verfahren zum Betreiben einer Umrichteranordnung (10) mit einem modularen Matrixumrichter (11), wobei der Matrixumrichter Schaltmodule (SM) umfasst, die jeweils Leistungshalbleiterschalter (S1-S4) sowie einen schaltmoduleigenen Energiespeicher (C) aufweisen, und der netzseitig mit einer zumindest dreiphasigen Wechselspannungsverbindung (24) verbunden ist, sowie mit einer Vorladeeinrichtung (31) zum Vorladen der Energiespeicher, wobei die Vorladeeinrichtung wenigstens ein Vorlademodul (32) umfasst, das netzseitig mit genau zwei Phasenleitungen der Wechselspannungsverbindung und lastseitig mit einem ersten Ausgang des Matrixumrichters (U,V,W) verbunden ist, und das Schaltelemente (53,56) umfasst, mittels deren die beiden Phasenleitungen jeweils mit dem ersten Ausgang des Matrixumrichters verbindbar sind, bei dem
zum Vorladen der Energiespeicher (C) der Matrixumrichter (11) lastseitig mittels der Vorladeeinrichtung (31) sequenziell mit zwei Phasenleitungen (21-23) der Wechselspannungsverbindung (24) verbunden wird.
